# EUROPEAN PATENT APPLICATION

(11) **EP 4 535 584 A1**
(43) Date of publication of application: **09.04.2025**
(21) Application number: 22944751.1
(22) Date of filing: 30.05.2022
(51) Int. Cl.: H02B 13/045

(54) **GAS-INSULATED APPARATUS**

(71) Applicant: MITSUBISHI ELECTRIC CORPORATION, Chiyoda-ku Tokyo 100-8310 (JP)
(72) Inventor: SATO, Koma, Tokyo 100-8310 (JP)
(74) Representative: Witte, Weller & Partner Patentanwälte mbB
(86) International application number: PCT/JP2022/021912
(87) International publication number: WO 2023/233461

(57) **Abstract**

A vacuum circuit breaker includes: a grounded tank (1) and a movable-side support plate (8a) that constitute a part of a container in which an insulating gas is sealed; and a sealant layer (10) provided at a coupling point between the grounded tank (1) and the movable-side support plate (8a), in which a joint surface (1e, 8d) of each of the grounded tank (1) and the movable-side support plate (8a) is a flat surface, and the joint surfaces (1e, 8d) abut against each other, the sealant layer (10) includes: a resin layer (10a) formed using a resin that is a dispersion medium; and a filler (10b) that is a dispersoid and is dispersed in the resin layer (10a), the filler (10b) is formed containing a material having lower gas permeability than the resin that forms the resin layer (10a), and a particle size of the filler (10b) is smaller than projections and recesses of the joint surface (1e, 8d) of each of the grounded tank (1) and the movable-side support plate (8a).

## Description

### Field

The present disclosure relates to a gas insulation device in which a charging unit is accommodated in a container in which an insulating gas is sealed.

### Background

In devices such as a vacuum circuit breaker, a disconnector, and a switch used in an electric circuit through which a current of a voltage exceeding 7000 V flows, which is referred to as a special high voltage, a charging unit is accommodated in a container in which an insulating gas that is an insulating medium such as sulfur hexafluoride and dry air is sealed. The device in which the charging unit is accommodated in the container in which the insulating gas is sealed is referred to as a gas insulation device.

While the container in which the insulating gas is sealed is formed by connecting a plurality of tanks, it is necessary to prevent leakage of the insulating gas from a joint portion between the tanks in order to maintain insulation performance.

Patent Literature 1 discloses that a groove is formed on a joint surface of a flange of a container in which an insulating gas sealed, a gasket that is made of elastic rubber having a circular cross section and called an O-ring is attached, and a sealant is applied to the joint surface of the flange to impart waterproofness and gas sealability. Nitrile rubber is generally used for the O-ring, and a silicone resin is generally used for the sealant.

### Citation List

### Patent Literature

Patent Literature 1: Japanese Patent Application Laid-open No. S55-103006

### Summary of Invention

### Problem to be solved by the Invention

However, since flexible materials such as elastic rubber and a silicone resin have gas permeability, it is difficult to maintain a gas pressure in the container for a long period of time. In particular, in a case of reducing a size of the device by increasing a sealing pressure of the insulating gas or using an insulating gas having a small molecular weight such as dry air, an amount of the insulating gas that leaks through the O-ring and the sealant tends to increase. In the structure disclosed in Patent Literature 1, leakage of the insulating gas can be reduced by using the O-ring and the sealant in combination. However, it is necessary to perform groove processing on the joint surface of the flange and disposing work of the O-ring in the groove, and the number of man-hours for manufacturing work and the number of man-hours for assembly work of the container in which the insulating gas is sealed increase.

The present disclosure has been made in view of the above, and an object of the present disclosure is to obtain a gas insulation device capable of suppressing an increase in the number of man-hours for manufacturing work and the number of man-hours for assembly work of a container in which an insulating gas is sealed, and maintaining a gas pressure in the container for a long period of time.

### Means to Solve the Problem

To solve the above-described problems and achieve the object, a gas insulation device according to the present disclosure includes: a first member and a second member constituting at least a part of a container in which an insulating gas is sealed; and a sealant layer provided at a coupling point between the first member and the second member. A joint surface of each of the first member and the second member is a flat surface, and the joint surfaces abut against each other. The sealant layer has a resin layer formed using a resin that is a dispersion medium, and a filler that is a dispersoid and is dispersed in the resin layer. The filler is formed using a material having lower gas permeability than the resin. A particle size of the filler is smaller than projections and recesses of the joint surface of each of the first member and the second member.

### Effects of the Invention

The present disclosure exhibits an effect of providing a gas insulation device capable of preventing an increase in the number of man-hours for manufacturing work and the number of man-hours for assembly work of a container in which an insulating gas is sealed, and maintaining a gas pressure in the container for a long period of time.

### Brief Description of Drawings

FIG. 1 is a cross-sectional view of a vacuum circuit breaker according to a first embodiment.
FIG. 2 is a cross-sectional view of an end portion of a grounded tank of the vacuum circuit breaker according to the first embodiment.
FIG. 3 is a cross-sectional view of a sealant layer of the vacuum circuit breaker according to the first embodiment.
FIG. 4 is a cross-sectional view of a sealant layer of a vacuum circuit breaker according to a second embodiment.

### Description of Embodiments

Hereinafter, a gas insulation device according to embodiments will be described in detail with reference to the drawings.

### First Embodiment.

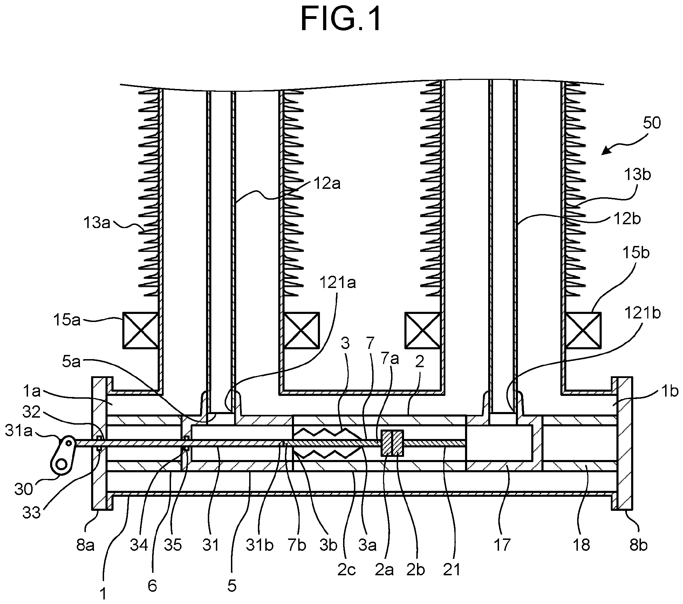

FIG. 1 is a cross-sectional view of a vacuum circuit breaker according to a first embodiment. A vacuum circuit breaker 50 according to the first embodiment is a gas insulation device in which a charging unit is accommodated in a container in which an insulating gas is sealed. The vacuum circuit breaker 50 according to the first embodiment includes: a grounded tank 1 having a tubular shape; and a vacuum valve 2 that includes a movable-side contact 2a and a fixed-side contact 2b and is insulated and supported in the grounded tank 1. Note that, with an interface between the movable-side contact 2a and the fixed-side contact 2b as a boundary, a member in the half including the movable-side contact 2a among members constituting the vacuum circuit breaker 50 is referred to as being on a "movable-side", and a member in the half including the fixed-side contact 2b is referred to as being on a "fixed-side". Further, the vacuum circuit breaker 50 according to the first embodiment includes a pair of tubular bushings 13a and 13b extending upward from the grounded tank 1, a movable-side bushing conductor 12a disposed in the bushing 13a, and a fixed-side bushing conductor 12b disposed in the bushing 13b.

A current transformer 15a that detects a current flowing through the movable-side bushing conductor 12a is installed in the bushing 13a. A current transformer 15b that detects a current flowing through the fixed-side bushing conductor 12b is installed in the bushing 13b.

In addition to the movable-side contact 2a and the fixed-side contact 2b, the vacuum valve 2 includes: a vacuum container 2c that accommodates the movable-side contact 2a and the fixed-side contact 2b; and a movable conductor 7 having one end portion 7a electrically connected to the movable-side contact 2a and another end portion 7b protruding from the vacuum container 2c. Further, the vacuum valve 2 includes a fixed conductor 21 electrically connected to the fixed-side contact 2b, and a bellows 3 having a concertina tube shape in which one end portion 3a is fixed to the movable conductor 7 and another end portion 3b is fixed to the vacuum container 2c.

Further, the vacuum circuit breaker 50 includes: an operation device 30 that is installed outside the grounded tank 1 and switches between a closing state and an open state by pushing and pulling an operation rod 31 along an axial direction of the grounded tank 1; the operation rod 31 having one end portion 31a connected to the operation device 30 and another end portion 31b connected to the another end portion 7b of the movable conductor 7; a movable-side frame 5 that electrically connects a lower end portion 121a of the movable-side bushing conductor 12a to the movable conductor 7; and a fixed-side frame 17 that electrically connects a lower end portion 121b of the fixed-side bushing conductor 12b to the fixed conductor 21. Moreover, the vacuum circuit breaker 50 includes: a movable-side insulation support tube 6 that insulates and causes the grounded tank 1 to support the movable-side frame 5; and a fixed-side insulation support tube 18 that insulates and causes the grounded tank 1 to support the fixed-side frame 17. The vacuum container 2c is fixed to the movable-side frame 5 and the fixed-side frame 17 individually with bolts (not illustrated). A hole 34 through which the operation rod 31 of the movable-side frame 5 passes is closed in an airtight state by a packing 35.

An opening 1a at an end portion of the grounded tank 1 from which the operation rod 31 protrudes is covered with a movable-side support plate 8a in which a hole 32 through which the operation rod 31 passes is formed. The movable-side support plate 8a is an end face plate that covers the opening 1a at the end portion of the grounded tank 1. An opening 1b at an end portion on the fixed-side of the grounded tank 1 is covered with a fixed-side support plate 8b. The fixed-side support plate 8b is an end face plate that covers the opening 1b at the end portion of the grounded tank 1. The grounded tank 1, the movable-side support plate 8a, and the fixed-side support plate 8b constitute a container in which an insulating gas is sealed.

A packing 33 is disposed in the hole 32 of the movable-side support plate 8a. A gap between the movable-side support plate 8a and the operation rod 31 is closed in a watertight state by the packing 33.

A driving force of the operation device 30 is transmitted to the movable-side contact 2a via the operation rod 31 and the movable conductor 7. The movable-side contact 2a can take a closing state in which the movable-side contact 2a is in contact with the fixed-side contact 2b by receiving the driving force of the operation device 30 and an open state in which the movable-side contact 2a is separated from the fixed-side contact 2b. A contact pressure spring (not illustrated) is attached to the operation rod 31, and a force pressing the movable-side contact 2a against the fixed-side contact 2b is applied to the operation rod 31 in the closing state. Therefore, energization performance between the movable-side contact 2a and the fixed-side contact 2b in the closing state is secured.

The movable-side bushing conductor 12a has a tubular shape, and the lower end portion 121a is connected to an opening 5a of the movable-side frame 5.

When the vacuum circuit breaker 50 performs an opening operation, the operation device 30 moves the operation rod 31 in a direction pulling out from the grounded tank 1. Therefore, the movable conductor 7 fixed to the operation rod 31 moves in a direction approaching the movable-side support plate 8a. Since the one end portion 3a of the bellows 3 is fixed to the movable conductor 7, the bellows 3 contracts as the movable conductor 7 moves.

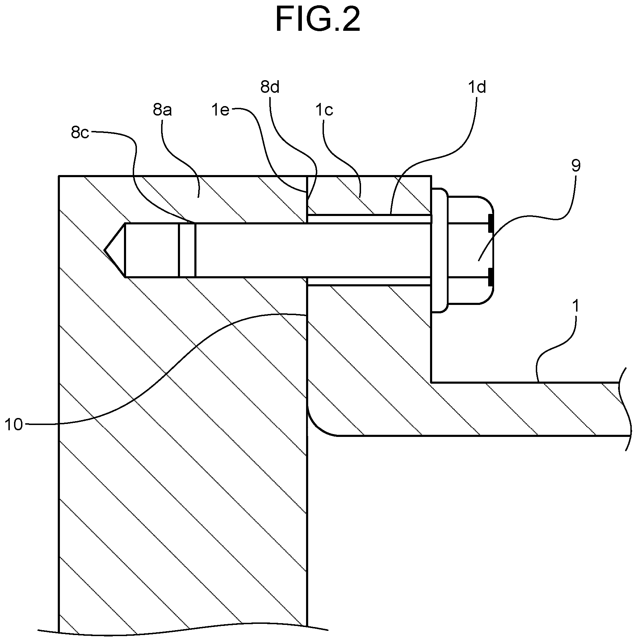

FIG. 2 is a cross-sectional view of an end portion of the grounded tank of the vacuum circuit breaker according to the first embodiment. The grounded tank 1 and the movable-side support plate 8a constitute a part of a container in which an insulating gas is sealed. That is, one of the grounded tank 1 and the movable-side support plate 8a is a first member constituting a part of the container in which the insulating gas is sealed, while another of the grounded tank 1 and the movable-side support plate 8a is a second member constituting a part of the container in which the insulating gas is sealed. Here, a coupling point between the grounded tank 1 and the movable-side support plate 8a is taken as an example, but this similarly applies to a coupling point between the grounded tank 1 and the fixed-side support plate 8b. That is, one of the grounded tank 1 and the fixed-side support plate 8b may be the first member constituting a part of the container in which the insulating gas is sealed, while another of the grounded tank 1 and the fixed-side support plate 8b may be the second member constituting a part of the container in which the insulating gas is sealed.

A flange 1c is formed at an end portion of the grounded tank 1. A through hole 1d is formed in the flange 1c.

A screw hole 8c is formed in the movable-side support plate 8a. The movable-side support plate 8a is fixed to the end portion of the grounded tank 1 by screwing a screw 9 penetrating the through hole 1d of the flange 1c into the screw hole 8c. A sealant layer 10 is provided at the coupling point between the grounded tank 1 as the first member and the movable-side support plate 8a as the second member. In the vacuum circuit breaker 50 according to the first embodiment, the sealant layer 10 is provided between the flange 1c and the movable-side support plate 8a. In the flange 1c of the grounded tank 1 and the movable-side support plate 8a, joint surfaces 1e and 8d are flat surfaces, and the joint surfaces 1e and 8d abut against each other. Now, here, one of the members constituting a part of the container in which the insulating gas is sealed is the plate-shaped movable-side support plate 8a, but a structure may be adopted in which tanks in which flanges are formed are coupled to each other.

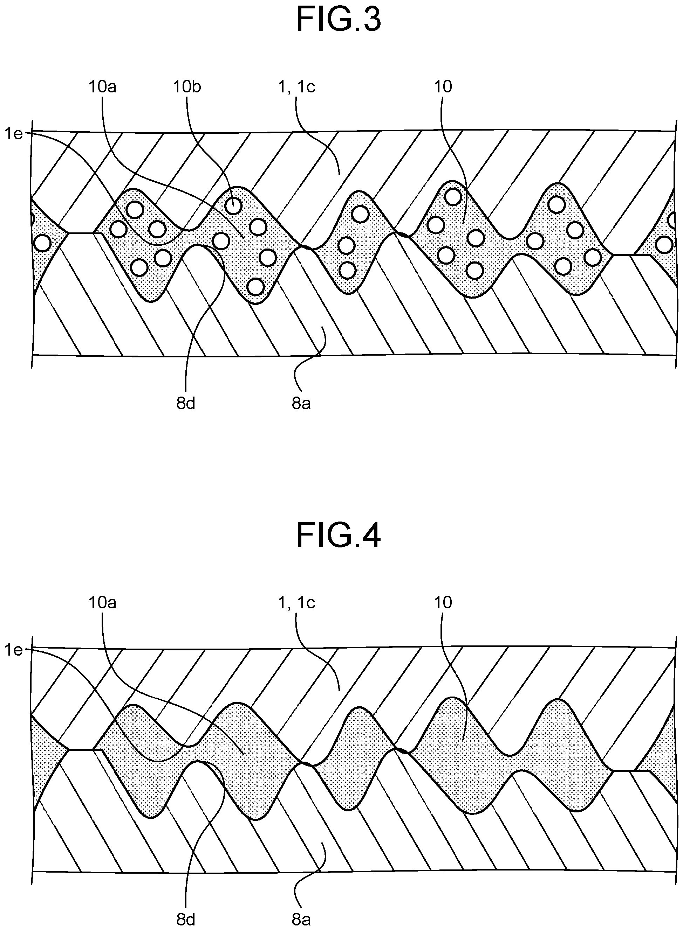

FIG. 3 is a cross-sectional view of the sealant layer of the vacuum circuit breaker according to the first embodiment. The joint surface 1e of the flange 1c of the grounded tank 1 and the joint surface 8d of the movable-side support plate 8a are provided with projections and recesses due to machining. Generally, the joint surfaces 1e and 8d are formed by milling processing, but may be formed by other processing methods. The sealant layer 10 includes a resin layer 10a formed using a resin as a dispersion medium and a filler 10b as a dispersoid. The resin layer 10a is formed using a silicone resin. The filler 10b is formed containing a material having lower gas permeability than the resin that forms the resin layer 10a. For example, silica or alumina can be used as the material of the filler 10b. A particle size of the filler 10b is smaller than the projections and recesses of each of the flange 1c and the movable-side support plate 8a. Therefore, the filler 10b enters a recess of the flange 1c and the movable-side support plate 8a.

In the vacuum circuit breaker 50 according to the first embodiment, the filler 10b having lower gas permeability than the resin layer 10a formed by the resin as the dispersion medium is dispersed in the resin layer 10a, so that molecules of the insulating gas moving in the resin layer 10a move while bypassing the filler 10b. Therefore, in the vacuum circuit breaker 50 according to the first embodiment, a leakage path of the insulating gas becomes longer as compared with a structure in which a resin layer in which a filler is not dispersed is used as the sealant layer and a structure in which an O-ring is used. Therefore, in the vacuum circuit breaker 50 according to the first embodiment, the insulating gas is less likely to leak as compared with the structure in which the resin layer in which the filler is not dispersed is used as the sealant and the structure in which the O-ring is used.

Note that, when a particle size of the filler 10b is too small, it is difficult for molecules of the insulating gas to bypass the filler 10b, and an effect of lengthening the leakage path of the insulating gas is reduced. In addition, when a particle size of the filler 10b is too small, the filler 10b is not uniformly dispersed but easily aggregated. When the joint surfaces 1e and 8d are formed by milling processing, the projections and recesses are about 1 µm to 10 µm. Therefore, by setting the particle size of the filler 10b to 1 µm to 10 µm, it is possible to lengthen the leakage path of molecules of the insulating gas while suppressing aggregation of the filler 10b.

Further, when a ratio of the filler 10b in the sealant layer 10 is too large, flexibility of the sealant layer 10 is impaired, and adherence to the flange 1c or the movable-side support plate 8a tends to be deteriorated. Therefore, the ratio of the filler 10b in the sealant layer 10 is preferably 50% or less.

In the vacuum circuit breaker 50 according to the first embodiment, the flange 1c of the grounded tank 1 and the movable-side support plate 8a are coupled to each other with the joint surfaces 1e and 8d, which are flat surfaces, abutting against each other. Therefore, it is not necessary to form a groove for disposing the O-ring on the flange 1c and the movable-side support plate 8a. Accordingly, the vacuum circuit breaker 50 can suppress an increase in the number of man-hours for manufacturing work and the number of man-hours for assembly work of the grounded tank 1, which is the container in which the insulating gas is sealed.

In addition, it is necessary to maintain a constant gas pressure in the tube so that the bellows 3 of the vacuum valve 2 not to be exposed to a high pressure by the sealed gas in the grounded tank 1. Therefore, the movable-side frame 5 and the bellows 3 of the vacuum valve 2 constitute the container in which the insulating gas is sealed, and a gas pressure in a space inside the movable-side frame 5 and the tube of the bellows 3 is made lower than a gas pressure in a space inside the grounded tank 1 and outside the tube of the movable-side frame 5. Therefore, in order to maintain the performance of the vacuum circuit breaker 50, it is necessary to consider not only the air pressure difference between the inside and outside of the grounded tank 1 but also the gas sealability between different gas pressure sections in the grounded tank 1. Therefore, for example, by providing the sealant layer 10 formed by the resin layer 10a and the filler 10b also at a connection point between the movable-side frame 5 and the vacuum valve 2 and a connection point between the movable-side frame 5 and the movable-side insulation support tube 6, it is possible to suppress leakage of the insulating gas in the space having different pressure sections inside the grounded tank 1.

In particular, in the vacuum circuit breaker 50 according to the first embodiment, an effect of maintaining a gas pressure in the grounded tank 1 for a long period of time can be remarkably obtained in a case of increasing a sealing pressure of the insulating gas to reduce a size of the gas insulation device or in a case of using an insulating gas having a small molecular weight such as dry air.

### Second Embodiment.

FIG. 4 is a cross-sectional view of a sealant layer of a vacuum circuit breaker according to a second embodiment. In the vacuum circuit breaker 50 according to the second embodiment, the sealant layer 10 is formed containing an epoxy resin. Further, in the vacuum circuit breaker 50 according to the second embodiment, the filler 10b is not dispersed in the epoxy resin, and the sealant layer 10 is formed by only the resin layer 10a.

By using, for example, a two-component curing type epoxy resin capable of controlling a curing time, it is possible to suppress curing of the epoxy resin during work of fixing the movable-side support plate 8a to the flange 1c.

In the vacuum circuit breaker 50 according to the second embodiment, the sealant layer 10 is formed by the resin layer 10a made of epoxy resin having lower gas permeability than silicone resin, so that the insulating gas is less likely to leak from the grounded tank 1, and the gas pressure in the grounded tank 1 can be maintained for a long period of time.

Similarly to the vacuum circuit breaker 50 according to the first embodiment, in the vacuum circuit breaker 50 according to the second embodiment, it is not necessary to form a groove for disposing an O-ring in the flange 1c and the movable-side support plate 8a. Therefore, the vacuum circuit breaker 50 can suppress an increase in the number of man-hours for manufacturing work and the number of man-hours for assembly work of the grounded tank 1, which is the container in which the insulating gas is sealed.

### Third Embodiment.

The sealant layer 10 of the vacuum circuit breaker 50 according to the third embodiment has the filler 10b similarly to the vacuum circuit breaker 50 according to the first embodiment. However, an epoxy resin is used for the resin layer 10a formed using a resin as a dispersion medium.

In the vacuum circuit breaker 50 according to the third embodiment, the resin layer 10a is formed using an epoxy resin having gas permeability lower than that of a silicone resin as a dispersion medium, so that it is possible to reduce leakage of the insulating gas as compared with the vacuum circuit breaker 50 according to the first embodiment. Further, similarly to the vacuum circuit breaker 50 according to the first embodiment, since the filler 10b as a dispersoid is contained in the sealant layer 10, a leakage path of molecules of the insulating gas becomes long. Therefore, the vacuum circuit breaker 50 according to the third embodiment can reduce leakage of the insulating gas as compared with the vacuum circuit breaker 50 according to the second embodiment. As described above, the vacuum circuit breaker 50 according to the third embodiment can maintain a gas pressure in the grounded tank 1 for a long period of time.

Note that, in the above description, the case where the gas insulation device is the vacuum circuit breaker 50 has been described as an example, but similar implementation is possible on a gas insulation device other than a circuit breaker, such as a disconnector or a switch.

The configurations illustrated in the above embodiments illustrate one example of the contents and can be combined with another known technique, and it is also possible to omit and change a part of the configuration without departing from the subject matter.

### Reference Signs List

1 grounded tank; 1a, 1b, 5a opening; 1c flange; 1d through hole; 1e, 8d joint surface; 2 vacuum valve; 2a movable-side contact; 2b fixed-side contact; 2c vacuum container; 3 bellows; 3a, 7a, 31a one end portion; 3b, 7b, 31b another end portion; 5 movable-side frame; 6 movable-side insulation support tube; 7 movable conductor; 8a movable-side support plate; 8b fixed-side support plate; 8c screw hole; 9 screw; 10 sealant layer; 10a resin layer; 10b filler; 12a movable-side bushing conductor; 12b fixed-side bushing conductor; 13a, 13b bushing; 15a, 15b current transformer; 17 fixed-side frame; 18 fixed-side insulation support tube; 21 fixed conductor; 30 operation device; 31 operation rod; 32, 34 hole; 33, 35 packing; 50 vacuum circuit breaker; 121a, 121b lower end portion.

## Claims

1. A gas insulation device comprising:
a first member and a second member constituting at least a part of a container in which an insulating gas is sealed; and
a sealant layer provided at a coupling point between the first member and the second member, wherein
a joint surface of each of the first member and the second member is a flat surface, and the joint surfaces abut against each other,
the sealant layer includes a resin layer formed using a resin that is a dispersion medium, and a filler that is a dispersoid and is dispersed in the resin layer,
the filler is formed using a material having lower gas permeability than the resin, and
a particle size of the filler is smaller than projections and recesses of the joint surface of each of the first member and the second member.

2. The gas insulation device according to claim 1, wherein the resin is an epoxy resin.

3. A gas insulation device comprising:
a first member and a second member constituting at least a part of a container in which an insulating gas is sealed; and
a sealant layer provided at a coupling point between the first member and the second member, wherein
a joint surface of each of the first member and the second member is a flat surface, and the joint surfaces abut against each other, and
the sealant layer is formed containing an epoxy resin.

4. The gas insulation device according to any one of claims 1 to 3, wherein
the first member is a grounded tank having a tubular shape, and the second member is an end face plate that covers an opening of an end face of the grounded tank.

5. The gas insulation device according to claim 4, comprising
a vacuum valve accommodated in the grounded tank.
